# EUROPÄISCHE PATENTANMELDUNG

(11) **EP 4 711 408 A1**
(43) Veröffentlichungstag der Anmeldung: **18.03.2026**
(21) Anmeldenummer: 24200650.0
(22) Anmeldetag: 16.09.2024
(51) Int. Cl.: C08J 11/14, C08J 11/24, C08J 11/28, B01D 17/02

(54) **VERFAHREN ZUR AUFARBEITUNG EINER ROHPRODUKT-FRAKTION AUS EINEM WIEDERVERWERTUNGSPROZESS EINES POLYURETHANPRODUKTS**

(71) Anmelder: Covestro Deutschland AG, 51373 Leverkusen (DE)
(72) Erfinder: Machat, Martin, 50735 Köln (DE); Tyagi, Deepika, 2611BZ Delft (NL); Raju, Suresh, 52072 Aachen (DE); Karaca, Ulvi, 52066 Aachen (DE); Maronna, Marius, 52379 Langerwehe (DE); Roth, Daniel, 79618 Rheinfelden (DE); Leitner, Walter, 52074 Aachen (DE)
(74) Vertreter: Levpat

(57) **Zusammenfassung**

Die vorliegende Erfindung betrifft ein Verfahren zur Aufarbeitung einer (Rohprodukt-)Fraktion enthaltend ein Polyetherpolyol und ein Amin, wobei die (Rohprodukt-)Fraktion aus einem Wiederverwertungsprozess eines auf einer Isocyanatkomponente und einer das Polyetherpolyol umfassenden Polyolkomponente basierenden Polyurethanprodukts stammt, das Verfahren umfassend einen Schritt (α):
Behandlung der (Rohprodukt-)Fraktion mit Kohlenstoffdioxid und eine Trennung in eine organische Polyetherpolyolfraktion und in eine wässrige Aminfraktion.

## Beschreibung

Das Projekt, das zu der vorliegenden Anmeldung führte, hat im Rahmen des *Horizon 2020 research and innovation programme* der Europäischen Union Fördermittel unter der Fördervereinbarung Nr. 101036854 erhalten.

Die vorliegende Erfindung betrifft ein Verfahren zur Aufarbeitung (mindestens) einer (Rohprodukt-)Fraktion enthaltend (mindestens) ein Polyetherpolyol und (mindestens) ein Amin, wobei die (mindestens eine) (Rohprodukt-)Fraktion aus einem Wiederverwertungsprozess eines auf einer Isocyanatkomponente und einer das (mindestens eine) Polyetherpolyol umfassenden Polyolkomponente basierenden Polyurethanprodukts stammt, das Verfahren umfassend einen Schritt (α):
Behandlung, insbesondere im Rahmen einer Extraktion, der (mindestens einen) (Rohprodukt-)Fraktion mit Kohlenstoffdioxid und eine Trennung in eine organische Polyetherpolyolfraktion und in eine wässrige Aminfraktion.

Polyurethanprodukte finden vielfältige Anwendungen in der Industrie und im Alltag. Üblicherweise wird bei den Polyurethanprodukten zwischen Polyurethanschäumen und sog. "CASE"-Produkten unterschieden, wobei "CASE" ein Sammelbegriff für Polyurethan-*Beschichtungen* (z. B. Lacke), *-Klebstoffe, -Dichtstoffe* und *-Elastomere* ist. Die Polyurethanschäume werden üblicherweise in Hartschäume (die beispielsweise als Isoliermaterialien eingesetzt werden können, etwa in Kühlgeräten oder im Hausbau) und Weichschäume (die beispielsweise als Polstermaterialien eingesetzt werden können, etwa in Polstermöbeln oder Autositzen) unterteilt. All diesen Produkten ist trotz ihrer Verschiedenheit die Polyurethangrundstruktur gemeinsam, die durch die Polyadditionsreaktion eines mehrwertigen Isocyanats (fortan kurz Isocyanat) und eines Polyols entsteht und sich beispielsweise für ein Polyurethan (PU), das auf einem Diisocyanat **O=C=N-R-N=C=O** und einem Diol H-O-R'-O-H basiert (wobei R und R' organische Reste bezeichnen), als

^{∼∼∼}[O-R'-O-**(O=C)-**H**N-R-N**H**-(C=O)**]^{∼∼∼}

darstellen lässt.

Gerade wegen des großen wirtschaftlichen Erfolges der Polyurethanprodukte fallen auch große Mengen an Polyurethanabfall (z. B. aus alten Matratzen oder Sitzmöbeln) an, der einer sinnvollen Verwendung zugeführt werden muss. Die technisch am einfachsten umzusetzende Art der Wiederverwendung ist die Verbrennung unter Nutzung der freiwerdenden Verbrennungswärme für andere Prozesse, beispielweise industrielle Herstellprozesse. Auf diese Weise ist jedoch eine Schließung der Rohstoffkreisläufe nicht möglich. Eine andere Art der Wiederverwendung ist das sog. "*physikalische* Recycling", bei welchem Polyurethanabfälle mechanisch zerkleinert und in der Herstellung neuer Produkte eingesetzt werden. Dieser Art des Recyclings sind naturgemäß Grenzen gesetzt, weshalb es nicht an Versuchen gefehlt hat, die der Polyurethanproduktion *zugrunde liegenden Rohstoffe* durch chemische Rückspaltung der Polyurethanbindungen (Chemolyse) wiederzugewinnen (sog. "*chemisches* Recycling"). Die durch eine solche chemische Spaltung zurückzugewinnenden Wertstoffe umfassen dabei **(1)** die den Polyurethanprodukten zugrundeliegenden Polyole (im obigen Beispiel also H-O-R'-O-H) oder, abhängig von derArt des ursprünglich eingesetzten Polyols, monomere und/oder oligomere Folgeprodukte derselben, und **(2)** die zu den ursprünglich eingesetzten Isocyanaten korrespondierenden Amine (im obigen Beispiel also H₂N-R-NH₂), die sich nach Aufarbeitung wieder zu Isocyanaten (im obigen Beispiel zu O=C=N-R-N=C=O) phosgenieren lassen. In bestimmten Varianten des chemischen Recyclings können die Isocyanate auch direkt gewonnen werden (durch thermische Spaltung zunächst gebildeter niedermolekularer Carbamate).

Eine Zusammenfassung der bis 2018 bekannten Verfahren des Polyurethanrecyclings bietet der Übersichtsartikel von *Simón, Borreguero, Lucas* und *Rodríguez* in *Waste Management* **2018,** 76, 147 - 171 [1]. Als besonders bedeutsam wird dort die Glykolyse (siehe nachfolgend Nr. 2) herausgestellt.

Verschiedene Ansätze des chemischen Recyclings wurden in der Vergangenheit entwickelt. Fünf davon werden im Folgenden kurz zusammengefasst:
1. **Hydrolyse** von Urethanen durch Umsetzung mit Wasser unter Gewinnung von Aminen und Polyolen unter Bildung von Kohlenstoffdioxid.
2. **Glykolyse** (**Alkoholyse**) von Urethanen durch Umsetzung mit Alkoholen, wobei die Polyole, die in den Urethangruppen eingebaut sind, durch den eingesetzten Alkohol ersetzt und auf diese Weise freigesetzt werden. Dieser Vorgang wird in der Literatur meist als *Umesterung* bezeichnet (genauer: *Umurethanisierung*). Diese Art des chemischen Recyclings wird unabhängig von der genauen Art des eingesetzten Alkohols in der Literatur üblicherweise als *Glykolyse* bezeichnet, obwohl dieser Begriff eigentlich nur für Glykole zutreffend ist und man daher allgemeiner von Alkoholyse sprechen sollte. An eine Glykolyse kann sich eine Hydrolyse anschließen. Wird die Hydrolyse noch in Gegenwart des unveränderten Glykolysegemisches (also ohne vorherige Abtrennung der gebildeten Polyole) durchgeführt, spricht man von einer
3. **Hydroglykolyse** (**Hydroalkoholyse**) von Urethanbindungen. Es ist natürlich ebenfalls möglich, Alkohol und Wasser von Anfang an zuzugeben, wobei dann die oben beschriebenen Vorgänge der Hydrolyse und Glykolyse parallel ablaufen.
4. **Aminolyse** von Urethanbindungen durch Umsetzung mit primären oder sekundären Aminen, wobei die Polyole, die in den Urethangruppen eingebaut sind, durch das eingesetzte Amin ersetzt und auf diese Weise freigesetzt werden. Die Urethangruppen werden in diesem Fall zu Harnstoffgruppen umgewandelt. In gleicher Weise können auch die R-**N**H-(**C**=O)-Bindungen in den Urethanen gespalten und die R-NH-Gruppen durch das in der Aminolyse eingesetzte Amin ersetzt werden, wobei das zu dem ursprünglich eingesetzten Isocyanat korrespondierende Amin R-NH₂ freigesetzt wird. Werden Aminoalkohole mit primären oder sekundären Aminogruppen eingesetzt, können natürlich auch die Alkoholgruppen des eingesetzten Aminoalkohols mit Urethanbindungen reagieren, sodass es zur Bildung von Carbamaten kommen kann. Gemäß der Lehre des Großteils des Standes der Technik kann sich an eine Aminolyse eine Hydrolyse in einem separaten Schritt anschließen.
5. Eine der Hydroglykolyse entsprechende Reaktionsführung, bei der Amine oder Aminoalkohole und Wasser als Reagenzien eingesetzt werden, *ohne das vorher die freigesetzten Polyole abgetrennt werden,* wird in WO 2023/083968 A1 beschrieben und dort als **Aminohydrolyse** bezeichnet.

Das chemische Recycling ist bei auf Polyetherpolyolen basierenden Polyurethanprodukten besonders attraktiv, da Polyetherpolyole infolge ihrer vergleichsweise hohen Stabilität im Wesentlichen als solche, d. h. chemisch unverändert, wiedergewonnen werden können, während dies bei Polyurethanprodukten, die auf Polyolen mit vergleichsweise reaktiven funktionellen Gruppen in der Polymerkette (wie z. B. Polyesterpolyolen) basieren, nicht möglich ist, da es hier bei der Chemolyse unweigerlich zu einer Spaltung dieser funktionellen Gruppen kommt. Die rohen zurückgewonnenen Polyetherpolyole enthalten jedoch regelmäßig noch signifikante Anteile an Amin und/oder dessen Carbamat- oder Harnstoff-Vorläuferverbindungen. In gleicher Weise enthalten die rohen zurückgewonnenen Amine regelmäßig noch signifikante Anteile an Polyetherpolyolen. Die Reinigung dieser rohen Verfahrensprodukte (Rohproduktfraktionen) derart, dass der Anteil des jeweils anderen Zielproduktes auf vernachlässigbare Werte reduziert wird, ist nicht trivial und war schon Gegenstand zahlreicher Untersuchungen. Abhängig von der Natur der zurückgewonnenen Wertstoffe lassen sich diese nämlich nicht immer unzersetzt destillieren (z. B. langkettige Polyetherpolyole oder Polymethylenpolyphenylenpolyamine (pMDA) aus den korrespondierenden Polymethylenpolyphenylenpolyiscocyanaten (pMDI)), was eine Isolierung in hoher Reinheit sehr erschwert. Unabhängig vom Siedepunkt ist die Reinigung bestimmter Amine allein schon durch deren geringe Wasserlöslichkeit erschwert. Üblicherweise erfolgt die Trennung von Polyolen und Aminen nämlich durch Überführung der Polyole in eine vergleichsweise unpolare organische Phase und Überführung der Amine in eine vergleichsweise polare wässrige Phase, gefolgt von einer Trennung der beiden Phasen. Ist das Amin nur mäßig oder schlecht wasserlöslich, wird im Stand der Technik üblicherweise so vorgegangen, dass man eine Extraktion mit einer wässrigen Säure (insbesondere Salzsäure) durchführt, wodurch das Amin in protonierter Form in die wässrige Phase übergeht. Anschließend muss dieses natürlich wieder durch eine Basenbehandlung neutralisiert werden. Der Prozess erfordert also den stöchiometrischen Einsatz einer Säure und einer Base, was mit hohen Kosten und gesteigertem Aufwand bei der Abwasserreinigung verbunden ist.

WO 2020/260387 A1 und WO 2022/063764 A1 beschreiben Extraktionsprozesse zur Aufarbeitung von Produktgemischen einer Alkoholyse eines Polyurethanprodukts. Dabei werden eine Carbamat- und eine Polyolphase erhalten, und die Carbamatphase wird einer separaten Hydrolyse zur Gewinnung der zugrundeliegenden Amine unterzogen.

WO 2023/099420 A1 beschreibt ein Verfahren zur Gewinnung hochreiner Polyole aus Polyurethanprodukten, deren zugrundeliegende Isocyanatkomponente nur solche Isocyanate umfasst, deren korrespondierende Amine einen Siedepunkt bei 1013 mbar_{(abs.)} von maximal 410 °C, haben. Hierbei werden die Polyurethanprodukte durch eine Hydroalkoholyse gespalten, und das dabei erhaltene Produktgemisch wird durch eine Kombination aus Extraktionsschritten und einer Destillation und/oder Strippung unter Gewinnung von Polyolen hoher Qualität aufgearbeitet. Die in der Hydroalkoholyse gebildeten Amine können ebenfalls zurückgewonnen werden.

Wie bereits erwähnt, befasst sich die WO 2023/083968 A1 mit Aminohydrolyse. Zur vollständigen Abtrennung von Aminresten aus Rezyklat-Polyetherpolyolen wird auf den Einsatz effizienter Destillationsapparaturen verwiesen.

Keine der genannten Anmeldungen beschreibt den Einsatz von Kohlenstoffdioxid (CO₂), um die Effizienz der Trennung von Rezyklat-Polyetherpolyolen und Rezyklat-Aminen zu verbessern. Der Einsatz von CO₂ in anderem Zusammenhang ist beispielsweise in den folgenden Literaturstellen beschrieben:
WO 2010/125743 A1 beschreibt die Zersetzung von pMDI-basierten Harnstoffen mittels Hydrolyse in superkritischem CO₂.

Karen L. Toews, Robert M. Shroll, Chien M. Wai, und Neil G. Smart beschreiben in Anal. Chem. 1995, 67 (22), 4040 - 4043 eine Untersuchung betreffend die direkte Messung des pH-Wertes von Wasser in Kontakt mit überkritischem CO₂ durch Analyse der Spektren eines pH-Indikators mit einem UV-VIS-Spektralphotometer. Der pH-Wert wurde unter Drücken von 70 bis 200 atm und bei Temperaturen von 25 bis 70 °C analysiert. Der gemessene pH-Wert variierte von 2,80 bis 2,95 mit einer relativen Standardabweichungen von < 1,5 %. Die Auswirkungen des pH-Wertes auf die Effizienz von überkritischen Fluidextraktion von Metallen und ionisierbaren organischen Verbindungen in wasserhaltigen Systemen werden diskutiert.

Kevin N. West, Christy Wheeler, Jonathan P. McCarney, Kris N. Griffith, David Bush, Charles L. Liotta und Charles A. Eckert untersuchen in J. Phys. Chem. A 2001, 105, 3947 - 3948 Mischungen aus überkritischem CO₂ und kurzkettigen Alkoholen. Die Kombination von Alkohol und CO₂ führt zur in-situ-Bildung von Alkylcarbonsäuren.

In dem Artikel Diamines as switchable-hydrophilicity solvents with improved phase behaviour in RSC Adv., 2018, 8, 27318 von Jesse R. Vanderveen, Jialing Geng, Susanna Zhang und Philip G. Jessop wird die Verwendung von Diaminen als sog. SHS (*switchable-hydrophilicity solvent*) mit verbesserten Verteilungskoeffizienten untersucht. Es werden mehrere Diamin-SHS identifiziert und ihre Eigenschaften mit denen von Monoamin-SHS verglichen. Die Vergleiche umfassen die pKs-Werte, Verteilungskoeffizienten, Entfernung aus hydrophoben Flüssigkeiten, Schaltgeschwindigkeiten und Temperaturabhängigkeiten.

Yohann Coulier Alexander, R. Lowe, Alejandro Moreau, K. Ballerat-Busserolles J-Yves Coxam beschreiben in Fluid Phase Equilibria 2017, 431, 1 - 7 ternäre Systeme aus einem Amin, Wasser und CO₂: Die Flüssig-flüssig-Extraktion in wässrigen Lösungen von N-Methylpiperidin (NMPD, tertiäres Amin) und 2-Methylpiperidin (2MPD, sekundäres Amin) wurde in Abhängigkeit von der CO₂-Auflösung untersucht. Es wurden neue experimentelle Techniken entwickelt, um die Temperaturen der Phasentrennung in wässrigen Lösungen zu bestimmen, die mit kontrollierten Gasmengen beladen sind. Die experimentelle Untersuchung mit NMPD- und 2MPD-Lösungen zeigt gegensätzliche Effekte auf die Phasentrenntemperaturen bei CO₂-Auflösung. Der Einfluss von CO₂ auf Flüssig-flüssig-Extraktionen wurde anhand chemischer Reaktionen diskutiert, die in wässrigen Lösungen von sekundären und tertiären Aminen ablaufen.

WO 2014/099268 A1 beschreibt CO₂-Abscheidung aus einem Gasstrom unter Verwendung von Alkylaminen (primäre und sekundäre). Diese Amine reagieren direkt mit CO₂ zu Carbamaten. Die Bildung von Carbamaten aus Aminen (auch aromatischen Aminen) und CO₂ ist auch aus anderen Literaturstellen bekannt; siehe beispielsweise Hao-Yu Yuan, Jun-Chul Choi, Shun-ya Onozawa, Norihisa Fukaya, Seong, Jib Choi, Hiroyuki Yasuda, Toshiyasu Sakakura, Journal of CO2 utilization 2016, 16, 282 - 286.

Puxty, Graeme, Conway, Will, Yang, Qi, Bennett, Robert, Fernandes, Debra, Pearson, Pauline, Mäher, Dan, Feron, Paul beschreiben in International Journal of Greenhouse Gas Control, 2019, 83, 11 - 19 den Einsatz aromatischer Amine als Absorptionsmittel für CO₂.

Keine dieser Literaturstellen befasst sich mit der Aufreinigung roher Verfahrensprodukte aus Wiederverwertungsprozessen von Polyetherpolyol-basierten Polyurethanprodukten.

Es bestand also ein Bedarf an weiteren Verbesserungen auf dem Gebiet der Aufreinigung roher Verfahrensprodukte aus Wiederverwertungsprozessen von Polyetherpolyol-basierten Polyurethanprodukten. Insbesondere wäre es wünschenswert, die in solchen Prozessen regelmäßig anfallenden rohen Polyetherpolyol- und Aminfraktionen von vorhandenen Restanteilen des jeweils anderen Wertprodukts auf effiziente Weise möglichst weitgehend zu befreien.

Diesem Bedarf Rechnung tragend stellt die vorliegende Erfindung Folgendes bereit:
Ein Verfahren zur Aufarbeitung (mindestens) einer (Rohprodukt-)Fraktion enthaltend (mindestens) ein Polyetherpolyol und (mindestens) ein Amin, wobei die (mindestens eine) (Rohprodukt-)Fraktion aus einem Wiederverwertungsprozess eines auf einer Isocyanatkomponente und einer das (mindestens eine) Polyetherpolyol umfassenden Polyolkomponente basierenden Polyurethanprodukts stammt,
das Verfahren umfassend einen Schritt (α):
   Behandlung, insbesondere im Rahmen einer Extraktion, der (mindestens einen) (Rohprodukt-)Fraktion mit Kohlenstoffdioxid und eine Trennung in eine organische Polyetherpolyolfraktion und in eine wässrige Aminfraktion.
Vollkommen überraschend wurde gefunden, dass der Einsatz von Kohlenstoffdioxid die Trennung von Aminen und Polyetherpolyolen erleichtert. Ohne auf eine Theorie festgelegt sein zu wollen wird vermutet, dass dies auf eine Protonierung von Aminen durch Kohlensäure und / oder Carbamidsäuren zurückzuführen ist. Die so entstandenen NR₁R₂R₃H⁺-Gruppen erhöhen die Hydrophilie, sodass die protonierten Amine in die wässrige Phase (die *wässrige Aminfraktion*) übergehen und sich so von den tendenziell eher unpolaren Polyetherpolyolen abtrennen lassen. Durch Erwärmung und/oder Druckverringerung der abgetrennten wässrigen Aminfraktion zersetzen sich die Amin-Hydrogencarbonate bzw. Amin-Carbamatsalze unter Abspaltung von Kohlenstoffdioxid und Rückbildung der freien Amine.

*Polyurethanprodukte* im Sinne der vorliegenden Erfindung sind die Polyadditionsprodukte, die durch Umsetzung von mehrwertigen *Isocyanaten* (= Iscocyanatkomponente der Polyurethanherstellung) mit *Polyolen* (= Polyolkomponente der Polyurethanherstellung) erhalten werden. Polyurethanprodukte enthalten im Allgemeinen neben der oben skizzierten Polyurethangrundstruktur noch andere Strukturen, zum Beispiel Harnstoff-, Isocyanurat-, Allophanat- und Biuretstruktureinheiten. Das Vorliegen derartiger von der reinen Polyurethangrundstruktur abweichender Strukturen neben Polyurethanstrukturen verlässt den Rahmen der vorliegenden Erfindung nicht. Polyurethanprodukte im Sinne der vorliegenden Erfindung sind bevorzugt Polyurethanschäume, erhalten durch Umsetzung von mehrwertigen Isocyanaten mit Polyolen in Gegenwart eines Treibmittels, und zwar insbesondere Polyurethanhartschäume. Im Rahmen der vorliegenden Erfindung wird unter einem *Polyurethanhartschaum* ein Polyurethanschaum verstanden, der eine gemäß DIN EN 826:2013-05 gemessene Druckspannung bei 10 % Stauchung (σ₁₀) von 10 kPa oder mehr aufweist.

In der Terminologie der vorliegenden Erfindung umfasst der Begriff *Polyole* grundsätzlich alle dem Fachmann im Zusammenhang mit der Polyurethanchemie bekannten Polyole wie insbesondere Polyetherpolyole. Der Ausdruck "*ein Polyol*" umfasst selbstverständlich auch Ausführungsformen, in denen zwei oder mehr unterschiedliche Polyole in der Herstellung eines Polyurethanprodukts eingesetzt wurden. Wird daher im Folgenden beispielsweise von "*einem Polyetherpolyol*" gesprochen, so umfasst diese Terminologie selbstverständlich auch Ausführungsformen, in denen zwei oder mehr verschiedene Polyetherpolyole in der Herstellung eines Polyurethanprodukts eingesetzt wurden. Die Gesamtheit aller in der Herstellung eines Polyurethanprodukts eingesetzten Polyole wird als *Polyolkomponente* (des Polyurethanprodukts) bezeichnet. Die Polyolkomponente eines nach dem erfindungsgemäßen Verfahren zu behandelnden Polyurethanprodukts umfasst stets mindestens ein Polyetherpolyol. Das Vorhandensein weitere Polyole (wie z. B. Polyesterpolyole, Polyetherester-Polyole und Polyethercarbonatpolyole) ist aber nicht ausgeschlossen.

In der Terminologie der vorliegenden Erfindung umfasst der Begriff *Isocyanate* alle dem Fachmann im Zusammenhang mit der Polyurethanchemie bekannten Isocyanate und meint insbesondere Toluylendiisoycanat (TDI), Methylendiphenylendiisocyanat (mMDI), Mischungen aus Methylendiphenylendiisocyanat und Polymethylenpolyphenylenpolyisocyanat, Methylendicyclohexyl-4,4'-diisocyanat (H12MDI) und Mischungen derselben. Der Ausdruck "*ein Isocyanat*" umfasst selbstverständlich auch Ausführungsformen, in denen zwei oder mehr unterschiedliche Isocyanate (z. B. Gemische aus MDI und TDI) in der Herstellung eines Polyurethanprodukts eingesetzt wurden, es sei denn, etwas anderes wird ausdrücklich zum Ausdruck gebracht, etwa durch die Formulierung "*genau ein Isocyanat*". Die Gesamtheit aller in der Herstellung eines Polyurethanprodukts eingesetzten Isocyanate wird als *Isocyanatkomponente* (des Polyurethanprodukts) bezeichnet. Die Isocyanatkomponente enthält mindestens ein Isocyanat.

Ein *zu einem Isocyanat korrespondierendes Amin* bezeichnet dasjenige Amin, durch dessen Phosgenierung das Isocyanat gemäß *R-NH₂* + *COCl₂* → *R-N=C=O* + *2 HCl* erhalten werden kann.

Unter einem *Chemolyseprodukt* wird im Rahmen der vorliegenden Erfindung das unmittelbare Verfahrensprodukt einer *Chemolyse,* also einer chemischen Umsetzung des Polyurethanprodukts unter Spaltung der Urethanbindungen durch Reaktion mit einer H-aciden Verbindung (insbesondere Wasser, Amine, Alkohole, Aminoalkohole oder Mischungen davon), verstanden.

Ein *organisches Chemolysereagenz* meint im Zusammenhang mit der vorliegenden Erfindung eine organische Verbindung, die über funktionelle Gruppen verfügt, welche mit Urethanbindungen unter deren Spaltung reagieren können, also insbesondere Alkohol- und Amingruppen.

Wenn im Rahmen der vorliegenden Erfindung von *einer Vorrichtung*/*Einrichtung* gesprochen wird (etwa in Ausdrücken wie "*ein Reaktor*" usw.), so sind davon auch Ausführungsformen umfasst, bei denen mehrere Vorrichtungen/Einrichtungen der genannten Art in Reihe oder parallel geschaltet sind (der beispielhaft genannte Ausdruck ist also als *"mindestens ein Reaktor"* zu lesen), es sei denn, es wird ausdrücklich etwas anderes gesagt (z. B. durch die Formulierung *"genau ein"*). Entsprechendes gilt für *Stoffe* (vgl. die obigen Ausführungen zu Polyolen und Isocyanaten).

Der Begriff *Destillation* wie im Sinne der vorliegenden Erfindung gebraucht umfasst auch eine Rektifikation.

Unter der *Extraktion* eines Verfahrensprodukts wird im Rahmen der vorliegenden Erfindung dessen Vermengung mit einem organischen und/oder wässrigen Extraktionsmittel *und anschließende Phasentrennung* verstanden.

Unter einer *Behandlung der (mindestens einen) (Rohprodukt-)Fraktion mit Kohlenstoffdioxid* wird im Rahmen der vorliegenden Erfindung eine gezielte Zugabe von Kohlenstoffdioxid zu der (Rohprodukt-)Fraktion verstanden. Das bei einer hydrolytischen Spaltung von Urethanbindungen in situ gebildete Kohlenstoffdioxid steht natürlich, insoweit es nicht ausgast, mindestens bis zur Aufarbeitung des unmittelbaren Verfahrensprodukts der Chemolyse "in Kontakt" mit dem reagierenden Gemisch und dem erhaltenen Rohprodukt; dieses "In-Kontakt-Stehen" ist für sich genommen keine Kohlenstoffdioxid-Behandlung im Sinne der vorliegenden Erfindung, sondern kann allenfalls unterstützend wirken.

Es folgt zunächst eine Kurzzusammenfassung verschiedener möglicher Ausführungsformen der Erfindung:
In einer ersten Ausführungsform der Erfindung, die mit allen anderen Ausführungsformen kombiniert werden kann, wird vor oder während der Durchführung von Schritt (α) Wasser zu der (mindestens einen) (Rohprodukt-)Fraktion gegeben.

In einer zweiten Ausführungsform der Erfindung, die mit allen anderen Ausführungsformen kombiniert werden kann, wird vor oder während der Durchführung von Schritt (α) ein organisches Lösungsmittel zu der (mindestens einen) (Rohprodukt-)Fraktion gegeben.

In einer dritten Ausführungsform der Erfindung, die eine besondere Ausgestaltung der zweiten Ausführungsform ist, ist das das organische Lösungsmittel ausgewählt aus (i) einem Ester (insbesondere ein C₂-C₆-Ester der Essigsäure oder ein Ethylester einer C₃-C₆-Carbonsäure oder Mischungen davon; besonders bevorzugt ist Essigsäurethylester), (ii) einem aromatischen Kohlenwasserstoff (insbesondere Xylol, Toluol oder Benzol, oder Mischungen davon), (iii) einem halogenierten aliphatischen oder aromatischen Kohlenwasserstoff (insbesondere Dichlormethan, Chloroform, Monochlorbenzol, Dichlorbenzol oder Mischungen davon), (iv) einem Ether (insbesondere aliphatische Ether wie Diethylether, Diisopropylether, *tert-*Butylmethylether oder Mischungen davon) oder (v) Mischungen von zwei oder mehr der vorgenannten organischen Lösungsmittel.

In einer vierten Ausführungsform der Erfindung, die mit allen anderen Ausführungsformen kombiniert werden kann, wird die (mindestens eine) (Rohprodukt-)Fraktion vor der Durchführung von Schritt (α) ohne Zugabe von Kohlenstoffdioxid mit Wasser gewaschen.

In einer fünften Ausführungsform der Erfindung, die mit allen anderen Ausführungsformen kombiniert werden kann, sofern diese nicht den Einsatz substanzieller Mengen Wassers in der Spaltung des Polyurethanprodukts ausschließen, umfasst der Wiederverwertungsprozess eine Umsetzung (= Chemolyse) des Polyurethanprodukts mit Wasser mit (sog. *Hydroalkoholyse* oder *Aminohydrolyse*) oder *ohne* (Hydrolyse) Zugabe eines organischen Chemolysereagenz unter Erhalt eines Amin-haltigen Chemolyseprodukts.

In einer sechsten Ausführungsform der Erfindung, die eine besondere Ausgestaltung der fünften Ausführungsform ist, wird das Amin-haltige Chemolyseprodukt oder ein aus diesem durch Abdestillieren von Bestandteilen, die leichter als das (mindestens eine) Polyetherpolyol und das (mindestens eine) Amin sieden, erhaltenes Verfahrensprodukt dem Schritt (α) unterworfen (= Kohlenstoffdioxid-Behandlung der in der Chemolyse erhaltenen Amin-Polyetherpolyol-Mischung *ohne Vortrennung derselben* in eine Amin-reiche Phase und eine Polyetherpolyol-reiche Phase; die *(mindestens eine) (Rohprodukt-)Fraktion* im Sinne der Erfindung ist also in dieser Ausführungsform das Amin-haltige Chemolyseprodukt selbst oder das nach dem Abdestillieren verbleibende Verfahrensprodukt enthaltend die in der Chemolyse gebildeten Amine und Polyetherpolyole).

In einer siebten Ausführungsform der Erfindung, die eine weitere besondere Ausgestaltung der fünften Ausführungsform ist, wird (mindestens) ein durch weitere Verarbeitung des Amin-haltigen Chemolyseprodukts umfassend eine Phasentrennung desselben oder (mindestens) eine Extraktion desselben mit einem organischen und/oder wässrigen Extraktionsmittel erhaltenes Verfahrensprodukt dem Schritt (α) unterworfen (= Kohlenstoffdioxid-Behandlung nach einer Vortrennung der in der Chemolyse erhaltenen Amin-Polyetherpolyol-Mischung in eine Amin-reiche Phase und eine Polyetherpolyol-reiche Phase, wobei eine davon oder jeweils beide eine *(Rohprodukt-)Fraktion* im Sinne der Erfindung sein können).

In einer achten Ausführungsform der Erfindung, die eine besondere Ausgestaltung der siebten Ausführungsform ist, umfasst die weitere Verarbeitung des Amin-haltigen Chemolyseprodukts ein Abdestillieren von Bestandteilen, die leichter als das (mindestens eine) Polyetherpolyol und das (mindestens eine) Amin sieden.

In einer neunten Ausführungsform der Erfindung, die eine weitere besondere Ausgestaltung der siebten Ausführungsform ist, werden Bestandteile, die leichter als das (mindestens eine) Polyetherpolyol und das (mindestens eine) Amin sieden, nach Durchführung des Schritts (α) aus der wässrigen Aminfraktion und/oder der organischen Polyetherpolyolfraktion abdestilliert.

In einer zehnten Ausführungsform der Erfindung, die mit allen anderen Ausführungsformen kombiniert werden kann, sofern diese nicht den Einsatz substanzieller Mengen Wassers in der Spaltung des Polyurethanprodukts vorsehen, umfasst der Wiederverwertungsprozess eine Umsetzung des Polyurethanprodukts mit einem organischen Chemolysereagenz (ohne Anwesenheit substanzieller Mengen Wassers) unter Erhalt eines Carbamat- und/oder Harnstoff-haltigen Chemolyseproduktes und eine Auftrennung desselben in eine erste, Carbamate und/oder Harnstoffe enthaltende Phase und eine zweite, Polyetherpolyole enthaltende Phase, wobei die zweite, Polyetherpolyole enthaltende Phase zur Abtrennung darin enthaltener Amine dem Schritt (α) unterworfen wird (die zweite, Polyetherpolyole enthaltende Phase ist also in dieser Ausführungsform eine *(Rohprodukt-)Fraktion* im Sinne der Erfindung, was das Vorhandensein weiterer (Rohprodukt-)Fraktionen im Sinne der Erfindung nicht ausschließt).

In einer elften Ausführungsform der Erfindung, die mit allen anderen Ausführungsformen kombiniert werden kann, sofern diese nicht den Einsatz substanzieller Mengen Wassers in der Spaltung des Polyurethanprodukts vorsehen, umfasst der Wiederverwertungsprozess eine Umsetzung des Polyurethanprodukts mit einem organischen Chemolysereagenz (ohne Anwesenheit substanzieller Mengen Wassers) unter Erhalt eines Carbamat- und/oder Harnstoff-haltigen Chemolyseproduktes und eine Auftrennung desselben in eine erste, Carbamate und/oder Harnstoffe enthaltende Phase und eine zweite, Polyetherpolyole enthaltende Phase, umfassend eine Hydrolyse der ersten, Carbamate und/oder Harnstoffe enthaltenden Phase unter Erhalt einer Amine enthaltenden Phase, wobei die Amine enthaltende Phase oder ein aus dieser durch Abdestillieren von organischem Chemolysereagenz erhaltenes Verfahrensprodukt zur Abtrennung darin enthaltener Polyetherpolyole dem Schritt (α) unterworfen wird (die Amine enthaltende Phase bzw. das daraus durch Abdestillieren von organischem Chemolysereagenz erhaltene Verfahrensprodukt ist also in dieser Ausführungsform eine *(Rohprodukt-)Fraktion* im Sinne der Erfindung, was das Vorhandensein weiterer (Rohprodukt-)Fraktionen im Sinne der Erfindung nicht ausschließt).

In einer zwölften Ausführungsform der Erfindung, die eine besondere Ausgestaltung der elften Ausführungsform ist, erfolgt die Hydrolyse der Carbamate und/oder Harnstoffe enthaltenden Phase unter Zugabe eines Katalysators.

In einer dreizehnten Ausführungsform der Erfindung, die eine besondere Ausgestaltung der zehnten, elften oder zwölften Ausführungsform ist, umfasst die Auftrennung des Carbamat- und/oder Harnstoff-haltigen Chemolyseproduktes eine Phasentrennung desselben oder (mindestens) eine Extraktion desselben mit einem organischen und/oder wässrigen Extraktionsmittel.

In einer vierzehnten Ausführungsform der Erfindung, die mit allen Ausführungsformen, die den Einsatz eines organischen Chemolysereagenz im Wiederverwertungsprozess vorsehen, kombiniert werden kann, umfasst (insbesondere: ist) das organische Chemolysereagenz (i) einen Alkohol, (ii) ein primäres oder sekundäres Amin, (iii) einen Aminoalkohol mit einer primären oder sekundären Aminogruppe oder (iv) eine Mischung von zwei oder mehr der vorgenannten organischen Chemolysereagenzien.

In einer fünfzehnten Ausführungsform der Erfindung, die mit allen anderen Ausführungsformen kombiniert werden kann, umfasst das Verfahren eine Umsetzung des Polyurethanprodukts unter Zugabe eines Katalysators.

In einer sechzehnten Ausführungsform der Erfindung, die mit allen anderen Ausführungsformen kombiniert werden kann, wird die Behandlung der (mindestens einen) (Rohprodukt-)Fraktion mit Kohlenstoffdioxid in Schritt (α) so durchgeführt (Kohlenstoffdioxid in einer solchen Menge zugegeben), dass sich in einem Gasraum oberhalb der (Rohprodukt-)Fraktion ein Druck von 10 bar bis 70 bar, bevorzugt 25 bar bis 60 bar einstellt, wobei der Stoffmengenanteil von Kohlenstoffdioxid in der Gasphase 80 % bis 100 % beträgt.

In einer siebzehnten Ausführungsform der Erfindung, die eine besondere Ausgestaltung der sechzehnten Ausführungsform ist, wird ein Druck von 10 bar bis 70 bar, bevorzugt 25 bar bis 60 bar, bis zur erfolgten Trennung der mit Kohlenstoffdioxid behandelten (mindestens einen) (Rohprodukt-)Fraktion in die organische Polyetherpolyolfraktion und die wässrige Aminfraktion beibehalten.

In einer achtzehnten Ausführungsform der Erfindung, die mit allen anderen Ausführungsformen kombiniert werden kann, wird die Behandlung der (mindestens einen) (Rohprodukt-)Fraktion mit Kohlenstoffdioxid in Schritt (α) bei einer Temperatur von 4 °C bis 50°C durchgeführt.

In einer neunzehnten Ausführungsform der Erfindung, die eine besondere Ausgestaltung der achtzehnten Ausführungsform ist, wird eine Temperatur von 4 °C bis 50 °C bis zur erfolgten Trennung der mit Kohlenstoffdioxid behandelten (mindestens einen) (Rohprodukt-)Fraktion in die organische Polyetherpolyolfraktion und die wässrige Aminfraktion beibehalten.

In einer zwanzigsten Ausführungsform der Erfindung, die mit allen anderen Ausführungsformen kombiniert werden kann, wird die Behandlung der (mindestens einen) (Rohprodukt-)Fraktion mit Kohlenstoffdioxid in Schritt (α) für einen Zeitraum (Reaktionsdauer bzw. Verweilzeit) von 5 min bis 180 min, bevorzugt 10 min bis 90 min durchgeführt.

In einer einundzwanzigsten Ausführungsform der Erfindung, die mit allen anderen Ausführungsformen kombiniert werden kann, umfasst die Isocyanatkomponente ein Isocyanat ausgewählt aus (i) Toluylendiisoycanat (TDI), (ii) Methylendiphenylendiisocyanat (mMDI), (iii) einer Mischung (MDI) aus Methylendiphenylendiisocyanat (mMDI) und Polymethylenpolyphenylenpolyisocyanat (pMDI), (iv) Methylen-dicyclohexyl-4,4'-diisocyanat (H12MDI) oder (v) einer Mischung zwei oder mehr der vorgenannten Isocyanate.

In einer zweiundzwanzigsten Ausführungsform der Erfindung, die mit allen anderen Ausführungsformen kombiniert werden kann, umfasst das (mindestens eine) Polyetherpolyol (mindestens) ein Polymerisat von Propylenoxid und optional weiteren Epoxiden.

In einer dreiundzwanzigsten Ausführungsform der Erfindung, die eine besondere Ausgestaltung der zweiundzwanzigsten Ausführungsform ist, ist das (mindestens eine) Polyetherpolyol ausgewählt aus (i) einem Polymerisat von Propylenoxid allein, (ii) einem Polymerisat von Propylenoxid und Ethylenoxid oder (iii) einer Mischung aus (i) und (ii).

Die zuvor kurz geschilderten Ausführungsformen und weitere mögliche Ausgestaltungen der Erfindung werden im Folgenden näher erläutert.

### AUSWAHL UND VOBEREITUNG DER POLYURETHANPRODUKTE

Das erfindungsgemäße Verfahren eignet sich insbesondere für einen Einsatz im Recycling solcher Polyurethanprodukte, deren Isocyanatkomponente ein Isocyanat ausgewählt aus (i) Toluylendiisoycanat (TDI), (ii) Methylendiphenylendiisocyanat (mMDI), (iii) einer Mischung (MDI) aus Methylendiphenylendiisocyanat (mMDI) und Polymethylenpolyphenylenpolyisocyanat (pMDI), (iv) Methylendicyclohexyl-4,4'-diisocyanat (H12MDI) oder (v) einer Mischung zwei oder mehr der vorgenannten Isocyanate umfasst. Besonders bevorzugt umfasst die Isocyanatkomponente (iii) MDI, wobei ganz besonders bevorzugt neben MDI keine weiteren Isocyanate vorhanden sind. Was die Polyolkomponente angeht, ist es bevorzugt, dass das mindestens eine Polyetherpolyol ein Polymerisat von Propylenoxid und optional weiteren Epoxiden umfasst. Besonders bevorzugt ist das mindestens eine Polyetherpolyol ausgewählt aus (i) einem Polymerisat von Propylenoxid allein, (ii) einem Polymerisat von Propylenoxid und Ethylenoxid oder (iii) einer Mischung aus (i) und (ii). Wie bereits erwähnt, kann die Polyolkomponente neben mindestens einem Polyetherpolyol auch weitere Polyole enthalten. Bevorzugt ist dies jedoch nicht der Fall, d. h. bevorzugt umfasst die Polyolkomponente nur Polyetherpolyole.

Bevorzugt handelt es sich bei dem Polyurethanprodukt um einen Polyurethanschaum, besonders bevorzugt um einen Polyurethanhartschaum.

Das Polyurethanprodukt kann ein gebrauchtes (sog. *End of* Life-)Material sein. Es kann sich aber auch um Abfälle aus der Neuherstellung von Polyurethanprodukten handeln. In letzterem Fall ist die chemische Natur der in der Herstellung eingesetzten Polyolkomponente (sowie die der Isocyanatkomponente) selbstverständlich bekannt.

Im Fall der Wiederverwendung eines gebrauchten Polyurethanprodukts wird insbesondere durch eine geeignete Sortierung sichergestellt, dass es sich um einen für die Zwecke des erfindungsgemäßen Verfahrens geeignetes Polyurethanprodukt (also eines, dessen Polyolkomponente mindestens ein Polyetherpolyol enthält) handelt. Bei Kenntnis des ursprünglichen Anwendungsgebiets eines wiederzuverwertenden gebrauchten Polyurethanprodukts wird nämlich regelmäßig bekannt sein, ob es sich um ein solches handelt, in dessen Herstellung Polyetherpolyole eingesetzt wurden oder nicht. Gleiches gilt natürlich für die Art der Isocyanatkomponente. Durch getrenntes Sammeln verschiedener Polyurethantypen kann daher die Identifizierung geeigneter Polyurethanprodukte auf einfache Weise gewährleistet werden. Wenn nicht genau bekannt ist, welche Eigenschaften ein zur Verfügung stehendes Polyurethanprodukt aufweist (etwa weil es sich um einen gebrauchtes Polyurethanprodukt mit nicht genau spezifizierter Herkunft handelt), kann dies analytisch festgestellt werden. Mittels ATR-Infrarotspektroskopie (ATR = *attenuated total reflection,* abgeschwächte Totalreflexion) lässt sich die Zusammensetzung eines Polyurethanprodukts qualitativ feststellen. Alle Polyether-Polyurethane zeichnen sich durch ihre C-O-C-Schwingungsbande bei 1100 cm⁻¹ aus. Liegen Propylenoxidpolyether vor, so tritt bei 2960 cm⁻¹ die für diese typische CH₃-Valenzschwingungsbande auf. Das IR-Spektrum gibt ebenfalls Auskunft darüber, ob es sich um ein teilweise oder vollständig MDI-basiertes Polyurethanprodukt handelt, denn solche Polyurethanprodukte sind über charakteristische Banden bei 1410 cm⁻¹, 1010 cm⁻¹ und 510 cm⁻¹ identifizierbar. Teilweise oder vollständig TDIbasierte Polyurethanprodukte können nach chemischer Spaltung des Polyurethanprodukts mit wasserfeuchter methanolischer KOH-Lösung durch ¹H-NMR-Spektroskopie nachgewiesen werden. Die Methylgruppe des bei der Spaltung gebildeten TDA liegt (gemessen in CDCl₃; chemische Verschiebung relativ zum Restprotonensignal) bei ca. 2,10 ppm im Fall des 2,4-Isomers und bei ca. 1,97 ppm im Fall des 2,6-Isomers. Der aromatische Bereich des 2,4-TDA erstreckt sich von 6,0 ppm bis 7,0 ppm, der des 2,6-TDA von 6,2 ppm bis 7,0 ppm.

Bevorzugt gehen dem eigentlichen chemischen Recycling des Polyurethanprodukts vorbereitende Schritte voran. Diese umfassen insbesondere die bereits erwähnte Sortierung und eine mechanische Zerkleinerung.

### DURCHFÜHRUNG DER CHEMOLYSE

Die mit dem erfindungsgemäßen Verfahren zu behandelnde (Rohprodukt-)Fraktion kann aus den verschiedensten Verfahren des chemischen Recyclings von Polyurethanprodukten stammen:
In einer ersten Variante umfasst der Wiederverwertungsprozess die in-situ-Bildung von Aminen durch Umsetzung (= Chemolyse) des Polyurethanprodukts mit Wasser. Diese Umsetzung kann in Gegenwart eines (alkoholischen oder aminischen) organischen Chemolysereagenz erfolgen (sog. *Hydroalkoholyse* oder *Aminohydrolyse*), aber auch in Abwesenheit eines solchen ("reine" *Hydrolyse*). In jedem Fall wird ein Amin-haltiges Chemolyseprodukt erhalten. Als gegebenenfalls eingesetzte organische Chemolysereagenzien eignen sich insbesondere (i) Alkohole, (ii) primäre oder sekundäre Amine, (iii) Aminoalkohole mit primären oder sekundären Aminogruppen oder (iv) Mischung davon.

In einer Ausführungsform dieser Variante wird das Amin-haltige Chemolyseprodukt, optional nach destillativer Abtrennung von Bestandteilen, die leichter als das mindestens eine Polyetherpolyol und das mindestens eine Amin sieden, dem Schritt (α) unterworfen. Es findet also vor Durchführung des Schritts (α) keine Vortrennung der in der Chemolyse erhaltenen Amin-Polyetherpolyol-Mischung in eine Amin-reiche Phase und eine Polyetherpolyol-reiche Phase statt. Die mindestens eine (Rohprodukt-)Fraktion im Sinne der Erfindung ist also in dieser Ausführungsform das Amin-haltige Chemolyseprodukt selbst (also das unmittelbare, "rohe" Verfahrensprodukt der Chemolyse) oder das nach dem Abdestillieren flüchtiger Bestandteile verbleibende Verfahrensprodukt enthaltend die in der Chemolyse gebildeten Amine und Polyetherpolyole. In einer besonderen Ausführungsform dieser Verfahrensweise kann das Kohlenstoffdioxid bereits bei laufender Chemolyse zugegeben werden, insbesondere dann, wenn es sich um solche Polyurethanprodukte handelt, die sich ohne Einsatz eines basischen Katalysators unter schwach sauren Bedingungen hydrolytisch spalten lassen.

In einer anderen Ausführungsform der ersten Variante wird das Amin-haltige Chemolyseprodukt in eine Amin-reiche und eine Polyetherpolyole-reiche Phase getrennt, und eine der oder beide der so erhaltenen Phasen wird dem Schritt (α) unterzogen (d. h. eine davon oder jeweils beide können eine (Rohprodukt-)Fraktion im Sinne der Erfindung sein). Im einfachsten Fall trennt sich das Amin-haltige Chemolyseprodukt spontan in eine Amin-reiche und eine Polyetherpolyol-reiche Phase. Abhängig von der genauen Natur des wiederzuverwertenden Polyurethanprodukts und dem angewandten Chemolyseverfahren kann es jedoch hilfreich sein, diese Trennung durch eine Extraktion mit einem organischen und/oder wässrigen Extraktionsmittel zu unterstützen. In dieser Ausführungsform wird der Schritt (α) also nach einer Vortrennung der in der Chemolyse erhaltenen Amin-Polyetherpolyol-Mischung in eine Amin-reiche Phase und eine Polyetherpolyol-reiche Phase durchgeführt, wobei eine davon oder jeweils beide eine *(Rohprodukt-)Fraktion* im Sinne der Erfindung sein können.

Auch in dieser Ausführungsform können flüchtige Bestandteile, die leichter als das (mindestens eine) Polyetherpolyol und das (mindestens eine) Amin sieden, durch Abdestillieren entfernt werden, nämlich direkt aus dem Amin-haltigen Chemolyseprodukt, aus der Amin-reichen und/oder der Polyetherpolyol-reichen Phase vor Durchführung des Schritts (α) oder auch aus der in Schritt (α) erhaltenen wässrigen Aminfraktion und/oder aus der organischen Polyetherpolyolfraktion.

In einer zweiten Variante umfasst der Wiederverwertungsprozess eine Umsetzung des Polyurethanprodukts mit einem organischen Chemolysereagenz unter Erhalt eines Carbamat- und/oder Harnstoff-haltigen Chemolyseproduktes (d. h. die Chemolyse wird ohne Anwesenheit substanzieller Mengen Wassers durchgeführt) und eine Auftrennung desselben in eine erste, Carbamate und/oder Harnstoffe enthaltende Phase und eine zweite, Polyetherpolyole enthaltende Phase. Diese Auftrennung kann durch spontane Phasentrennung erfolgen (sog. *Split phase*-Glykolyse) oder durch Extraktionsprozesse (beispielsweise wie in WO 2020/260387 A1 und WO 2022/063764 A1 beschrieben) unterstützt werden. Als organische Chemolysereagenzien eignen sich die gleichen wie zuvor für die erste Variante beschrieben.

In beiden Varianten kann die die Umsetzung des Polyurethanprodukts unter Zugabe eines Katalysators erfolgen. Als Katalysator eignet sich beispielsweise ein (insbesondere Alkalimetall- oder Erdalkalimetall-)Hydroxid, ein (insbesondere Alkalimetall- oder Erdalkalimetall-)Carboxylat (insbesondere Acetat), eine Zinnverbindung (insbesondere Dibutylzinndilaurat oder Zinn(II)-octoat [= Zinn(II)-2-ethylhexanoat]), eine Zinkverbindung (insbesondere Zinkacetat), ein (insbesondere Alkalimetall- oder Erdalkalimetall-)Carbonat, ein (insbesondere Alkalimetall- oder Erdalkalimetall-)Hydrogencarbonat, ein (insbesondere Alkalimetall- oder Erdalkalimetall-)Orthophosphat, ein (insbesondere Alkalimetall- oder Erdalkalimetall-)Monohydrogen-Orthophosphat, ein (insbesondere Alkalimetall- oder Erdalkalimetall-)Orthovanadat, ein Titanalkoholat, ein tertiäres Amin, Cäsiumfluorid oder einer Mischung von zwei oder mehr der vorgenannten Chemolysekatalysatoren.

In einer Ausführungsform der zweiten Variante wird die zweite, Polyetherpolyole enthaltende Phase zur Abtrennung darin enthaltener Amine dem Schritt (α) unterworfen (die zweite, Polyetherpolyole enthaltende Phase ist also in dieser Ausführungsform eine (Rohprodukt-)Fraktion im Sinne der Erfindung, was das Vorhandensein weiterer (Rohprodukt-)Fraktionen im Sinne der Erfindung nicht ausschließt). Die erste, Carbamate und/oder Harnstoffe enthaltende Phase kann auf verschiedene Weise weiterverarbeitet werden, beispielsweise können Carbamate und Harnstoffe mit an sich bekannten Verfahren thermisch, gegebenenfalls unterstützt durch Katalysatoren, in Isocyanate und Alkohole bzw. Amine überführt werden. Ist eine solche thermische Spaltung zur Isocyanatgewinnung angestrebt, empfiehlt es sich, die Chemolyse mit einem Alkohol durchzuführen, sodass die erste Phase überwiegend bis vollständig Carbamate enthält. Die erste, Carbamate und/oder Harnstoffe enthaltende Phase kann aber auch unter Freisetzung der korrespondierenden Amine hydrolysiert werden, was bevorzugt ist. Die dabei gebildete Amine enthaltende Phase kann dann, optional nach Abdestillieren von organischem Chemolysereagenz, zur Abtrennung darin enthaltener Restanteile an Polyetherpolyolen dem Schritt (α) unterworfen werden. In dieser Ausführungsform ist also die Amine enthaltende Phase bzw. das daraus durch Abdestillieren von organischem Chemolysereagenz erhaltene Verfahrensprodukt eine (Rohprodukt-)Fraktion im Sinne der Erfindung, was das Vorhandensein weiterer (Rohprodukt-)Fraktionen im Sinne der Erfindung nicht ausschließt. Die Hydrolyse der Carbamate und/oder Harnstoffe enthaltenden Phase kann durch Zugabe eines Katalysators unterstützt werden. Als Katalysator eignet sich beispielsweise ein (insbesondere Alkalimetall- oder Erdalkalimetall-)Hydroxid, ein (insbesondere Alkalimetall- oder Erdalkalimetall-)Carboxylat (insbesondere Acetat), eine Zinnverbindung (insbesondere Dibutylzinndilaurat oder Zinn(II)-octoat [= Zinn(II)-2-ethylhexanoat]), eine Zinkverbindung (insbesondere Zinkacetat), ein (insbesondere Alkalimetall- oder Erdalkalimetall-)Carbonat, ein (insbesondere Alkalimetall- oder Erdalkalimetall-)Hydrogencarbonat, ein (insbesondere Alkalimetall- oder Erdalkalimetall-)Orthophosphat, ein (insbesondere Alkalimetall- oder Erdalkalimetall-)Monohydrogen-Orthophosphat, ein (insbesondere Alkalimetall- oder Erdalkalimetall-)Orthovanadat, ein Titanalkoholat, ein tertiäres Amin, Cäsiumfluorid oder einer Mischung von zwei oder mehr der vorgenannten Chemolysekatalysatoren.

Zur Vermeidung unerwünschter Nebenreaktionen erfolgt die Chemolyse vorzugsweise unter Sauerstoffausschluss. Polyurethanschäume werden vorzugsweise bis in die Zellstruktur hinein von Sauerstoff befreit. Hierzu können die Zellen des Polyurethanschaumstoffs durch eine Abfolge von starken Druckverminderungen und Druckerhöhungen entgast oder mechanisch komprimiert und in einen Bereich reduzierten Drucks hineingedrückt werden (siehe WO 2022/128871 A1 für Details).

### DURCHFÜHRUNG DER KOHLENSTOFFDIOXIDBEHANDLUNG (SCHRITT (α))

Abhängig von der Art des Polyurethanprodukts und der Durchführung der Chemolyse kann es sinnvoll sein, der (mindestens einen) (Rohprodukt-)Fraktion vor oder während der Durchführung von Schritt (α) Wasser zuzusetzen, um die Ausbildung einer wässrigen Aminfraktion zu erleichtern.

Das einzusetzende Kohlenstoffdioxid kann aus unterschiedlichen Quellen stammen. Als Beispiele seien Kohlenstoffdioxid genannt, welches bei industriellen Prozessen gebildet und aus dem Abgasstrom bspw. über eine Aminwäsche und / oder Druckwechseladsorption gewonnen wird. Ein weiteres Beispiel sind chemische Prozesse wie beispielsweise Decarboxylierungsreaktionen, bei denen Kohlenstoffdioxid bereits in hoher Reinheit im Produktgasauslass erhalten werden kann. Insbesondere auch geeignet ist dasjenige Kohlenstoffdioxid, das bei der hydrolytischen Spaltung der Urethanbindungen gebildet wird. Dieses kann aus dem Reaktionssystem abgeführt, erforderlichenfalls komprimiert und dem Schritt (α), versetzt mit weiterem Kohlenstoffdioxid aus anderen Quellen, zugeführt werden.

Die erfindungsgemäße Kohlenstoffdioxidbehandlung der (Rohprodukt-)Fraktionen umfasst bevorzugt die Zugabe eines organischen Lösungsmittels. Diese Zugabe kann vor oder während der Durchführung des Schritts (α) erfolgen. Als organische Lösungsmittel eignen sich insbesondere (i) Ester (insbesondere C₂-C₆-Ester der Essigsäure, Ethylester einer C₃-C₆-Carbonsäure oder Mischungen davon; besonders bevorzugt ist Essigsäurethylester), (ii) aromatische Kohlenwasserstoffe (insbesondere Xylol, Toluol oder Benzol, oder Mischungen davon), (iii) halogenierte aliphatische oder aromatische Kohlenwasserstoffe (insbesondere Dichlormethan, Chloroform, Monochlorbenzol, Dichlorbenzol oder Mischungen davon), (iv) Ether (insbesondere aliphatische Ether wie Diethylether, Diisopropylether, *tert*-Butylmethylether oder Mischungen davon) oder (v) Mischungen von zwei oder mehr der vorgenannten organischen Lösungsmittel.

Unter Umständen kann es vorteilhaft sein, wenn der Kohlenstoffdioxidbehandlung der mindestens einen Rohproduktfraktion eine Wäsche derselben mit Wasser ohne Zugabe von Kohlenstoffdioxid (Neutralwäsche) vorangeht. Dies ist insbesondere dann angebracht, wenn die Polyolkomponente auch vergleichsweise hydrophile Polyetherpolyole umfasst, also Polyetherpolyole mit kurzer Kettenlänge und/oder hoher Funktionalität. Diese können durch eine solche Neutralwäsche aus dem Amin-Polyol-Gemisch entfernt werden. Die auf diese Weise gewaschene (von hydrophilen Polyetherpolyolen weitgehend bis vollständig befreite) Rohproduktfraktion wird anschließend dem Schritt (α) unterworfen, wodurch die Trennung von Aminen und eher unpolaren Polyetherpolyolen (also solchen mit langer Polymerkette und/oder geringer Funktionalität) gelingt.

Bevorzugt wird die die Behandlung der (mindestens einen) (Rohprodukt-)Fraktion mit Kohlenstoffdioxid in Schritt (α) so durchgeführt (Kohlenstoffdioxid in einer solchen Menge zugegeben), dass sich in einem Gasraum oberhalb der (Rohprodukt-)Fraktion ein Druck von 10 bar bis 70 bar, bevorzugt 25 bar bis 60 bar einstellt und der Stoffmengenanteil von Kohlenstoffdioxid in der Gasphase 80 % bis 100 % beträgt. Der Druck (= Gesamtdruck) kann mit handelsüblichen Manometern bestimmt werden. Der Stoffmengenanteil an Kohlenstoffdioxid wird für die Zwecke der vorliegenden Erfindung aus der bekannten Menge zugegebenen Kohlenstoffdioxids und der ebenfalls bekannten Menge eines gegebenenfalls zugegebenen Inertgases (insbesondere Stickstoff) errechnet. Anteile von gegebenenfalls verdampften Bestandteilen der Flüssigphase sind vernachlässigbar gering und werden bei der Rechnung nicht berücksichtigt. Bis zur erfolgten Abtrennung der wässrigen Aminfraktion sollte ein erhöhter Druck aufrecht erhalten werden; vorzugsweise erfolgt die Abtrennung bei dem gleichen Druck wie die eigentliche Kohlenstoffdioxidbehandlung.

Die Temperatur bei der Behandlung der (mindestens einen) (Rohprodukt-)Fraktion mit Kohlenstoffdioxid in Schritt (α) beträgt bevorzugt 4 °C bis 50°C. Bis zur erfolgten Abtrennung der wässrigen Aminfraktion sollte eine Temperaturerhöhung vermieden werden; vorzugsweise erfolgt die Abtrennung bei der gleichen Temperatur wie die eigentliche Kohlenstoffdioxidbehandlung.

Vorzugsweise wird die Behandlung der (mindestens einen) (Rohprodukt-)Fraktion mit Kohlenstoffdioxid in Schritt (α) für einen Zeitraum (Reaktionsdauer bzw. Verweilzeit) von 5 min bis 180 min, bevorzugt 10 min bis 90 min durchgeführt.

Die Durchführung des Schritts (α) kann diskontinuierlich oder kontinuierlich durchgeführt werden. Eine diskontinuierliche Durchführung kann in einem druckstabilen Gefäß mit Mischfunktion (bspw. Druckreaktor) und einer Vorrichtung für die Abtrennung der Phasen erfolgen. Eine kontinuierliche Durchführung kann in druckstabilen Extraktionseinheiten mit Misch- und -Absetzfunktion erfolgen (bspw. ein druckstabiler *Mixer-Settler*).

Wird die Kohlenstoffdioxidbehandlung bei einer Chemolyse mit Wasser vor Beendigung des Chemolyseprozesses durchgeführt, liegt ein dreiphasiges Reaktionssystem vor (Feststoff [Polyurethan], organische Phase, wässrige Phase). In dieser Ausführungsform ist es bevorzugt, der Reaktion kontinuierlich Polyurethan (bspw. über eine Schneckenförderung oder als Aufschlämmung [sog. *Slurry*])*,* gegebenenfalls das oben erwähnte organische Lösungsmittel und Wasser sowie gegebenenfalls organisches Chemolysereagenz zuzuführen und die gebildete organische Phase und wässrige Phase kontinuierlich zu entnehmen und voneinander zu trennen. Als Reaktorsystem eignet sich beispielsweise ein kontinuierlicher Rührkesselaufbau (sog. *CSTR*), insbesondere ausgestattet mit Druckhalteventilen und bei isobaren Bedingungen betrieben. Der CO₂-Anteil im System ergibt sich durch externe Zugabe von CO₂ (insbesondere zu Beginn der Reaktion, um das gewünschte Druckniveau zu erreichen) *und* solches CO₂, das sich während der hydrolytischen Spaltung der Urethanbindungen *in situ* bildet.

### Beispiele:

### Chemikalien

| | |
|---|---|
| 4,4'-Methylendiphenylendiamin (4,4'-mMDA), 98%ig | Sigma Aldrich |
| 2,4-Toluylendiamin (2,4-TDA), 98%ig | Sigma Aldrich |
| Essigsäureethylester, 99,9%ig | VWR |
| Polyol 1⁽¹⁾ | Covestro Deutschland AG |
| Polyol 2⁽²⁾ | Covestro Deutschland AG |
| Polyol 3⁽³⁾ | Covestro Deutschland AG |
| Polyol 4⁽⁴⁾ | Covestro Deutschland AG |
| Polyol 5⁽⁵⁾ | Covestro Deutschland AG |
| "MDA-61"⁽⁶⁾ | Covestro Deutschland AG |

| | |
|---|---|
| (1) Polyetherpolyol (OHZ: 48 mg/g; Funktionalität (F) = 2,8; Propylenoxid-(PO-)Gehalt: 87 %); wird typischerweise für die Herstellung von Weichschäumen verwendet - Polyol 1. (2) Polyetherpolyol (OHZ: 400 mg/g; F = 4,0; PO-Gehalt: 75 %); wird typischerweise für die Herstellung von Hartschäumen verwendet - Polyol 2. (3) Polyetherpolyol (OHZ: 477 mg/g; F = 5,5; PO-Gehalt: 74 %); wird typischerweise für die Herstellung von Hartschäumen verwendet - Polyol 3. (4) Polyetherpolyol (OHZ: 112 mg/g; F = 2,0; PO-Gehalt: 92 %); wird typischerweise für die Herstellung von Hartschäumen verwendet - Polyol 4. (5) Polyetherpolyol (OHZ: 450 mg/g; F = 4,7; PO-Gehalt: 66 %); wird typischerweise für die Herstellung von Hartschäumen verwendet - Polyol 5. (6) Mischung (MDA) aus Methylendiphenylendiamin (mMDA) und Polymethylenpolyphenylenpolyamin (pMDA). | |

### Verwendete Polyole

**Polyolgemisch A:** Vier verschiedene Polyole wurden in den nachfolgend genannten Verhältnissen zu einer typischen Polyolkomponente ("Polyolgemisch A") für eine Polyurethan-Hartschaumrezeptur gemischt.

| | |
|---|---|
| Polyol 2 | 25 Massen-% |
| Polyol 3 | 34 Massen-% |
| Polyol 4 | 7 Massen-% |
| Polyol 5 | 34 Massen-% |

**Polyol B:** Polyol 1 wurde als repräsentatives Beispiel für ein Weichschaumpolyetherpolyol ("Polyol B") verwendet.

### Verwendete Schaumrezepturen

**Schaumrezeptur 1:** Formulierung des in den Beispielen 9 und 10 umgesetzten Polyurethanhartschaums (Angaben sind Massenteile):

| | |
|---|---|
| Polyol 3 und Polyol 5 | 25 |
| Polyol 2 | 9,3 |
| Polyol 4 | 2,6 |
| Wasser | 0,9 |
| Siloxan-Additiv⁽¹⁾ | 0,7 |
| Amin-Katalysatoren^{(2),(3)} | 0,7 |
| Cyclopentan⁽⁴⁾ | 5,4 |
| "Desmodur 44V20L"⁽⁵⁾ | 55,4 |
| Kennzahl⁽⁶⁾ | 108 |

| | |
|---|---|
| (1) Polyethersiloxan-Additiv der Evonik AG. (2) Amin-Katalysator der Covestro Deutschland AG. (3) Amin-Katalysator der Evonik AG. (4) Physikalisches Treibmittel. (5) Desmodur 44V20L ist eine Mischung aus pMDI und mMDI der Covestro Deutschland AG. (6) Eingesetzte Stoffmenge an NCO-Gruppen pro 100 mol OH-Gruppen. | |

### Analytik

### ¹H-NMR-Spektroskopie

Die Messungen erfolgten auf einem Bruker Avance III 400 (400 MHz); die Kalibrierung der chemischen Verschiebungen erfolgte relativ zum Restprotonensignal (DMSO-d6: δ 1H = 2.50 ppm).

Für die Bestimmung der Zusammensetzungen der einzelnen Phasen nach erfolgtem Extraktionsschritt wurden die Amin- bzw. Polyetherpolyolanteile in den beiden Phasen mit Hilfe einer Kalibriergeraden ermittelt.

Für die Untersuchung von Gemischen aus 4,4'-mMDA / Polyolgemisch A bzw. MDA / Polyolgemisch A oder Hydrolysaten von PUR-Hartschäumen (**Beispiele 1 bis 8**) wurden zur Bestimmung der Amin/Polyol-Massenverhältnisse die Protonensignale im aromatischen Bereich integriert. Diese wurden im Fall der Verwendung von Polyetherpolyolen mit *ortho*-TDA als Startermolekül um den Beitrag des *ortho*-TDA in diesem Signalbereich korrigiert. Als repräsentativ für das verwendete Polyetherpolyol(gemisch) wurde das -CH₃-Signal im aliphatischen Bereich integriert.

Für die Untersuchung von Gemischen aus TDA und Polyol B (**Beispiele 9 und 10**) wurde zur Bestimmung der Amin/Polyol-Massenverhältnisse das Protonensignale der aromatischen CH₃-Gruppe integriert. Als repräsentativ für das verwendete Polyetherpolyol(gemisch) wurde das -CH₃-Signal im aliphatischen Bereich integriert.

### Allgemeine Arbeitsvorschriften

### Abkürzungen

| Name | Phase | Kommentare |
|---|---|---|
| A | Wässrige Phase | Neutral, ohne CO₂ |
| B | Organische Phase | Siehe Details der korrespondierenden wässrigen Phase |
| C | Wässrige Phase | In Anwesenheit von zusätzlichem CO₂ |

### Extraktionsversuche

### Experimentelles Verfahren zur Trennung von Aminen (mMDA oder Gemische aus mMDA und pMDA) und Polyetherpolyolen

**(m)MDA / Polyolgemisch A:** Jeweils 1,2 g 4,4'-mMDA bzw. "MDA-61" werden mit 0,8 g der Polyolmischung A gemischt. Das erhaltene Gemisch wird jeweils in 150 ml Essigsäureethylester gelöst. Dann werden 150 ml entionisiertes Wasser zur Mischung gegeben. Zunächst wird eine neutrale wässrige Extraktion im Scheidetrichter durchgeführt. Dabei werden die organischen, Essigsäureethylester-haltige Phasen jeweils mit 150 ml Wasser extrahiert (Schüttelzeit 1 min; Phasentrennung 10 min). Je nach Anzahl der erfolgten Extraktionsschritte werden die wässrigen Phasen (A1, A2, A3) erhalten. Die organische Phase **B** ("**B1**" für die erste Extraktion mit Wasser, "**B2**" für die zweite usw.) wird im Anschluss für Extraktionen in Anwesenheit von CO₂ in einen druckbeständigen Stahlreaktor gegeben, gefolgt von der Zugabe von 150 ml entionisiertem Wasser.

Der Reaktor wird geschlossen, mit 10 bar CO₂ beaufschlagt und wieder entspannt. Dieser Vorgang wird noch 2x wiederholt. Anschließend wird der Reaktor mit CO₂-Gas bei der gewünschten Temperatur beaufschlagt (siehe Tabelle 1 für exakte Druck und Temperaturwerte). Das Reaktionsgemisch wird unter CO₂-Druck bei der jeweils angegebenen Temperatur für 1 h gerührt (600 U/min). Nach 1 h wird das Rühren gestoppt und das Reaktionsgemisch für 15 min unter Druck ruhen gelassen, um die Phasentrennung (die ebenfalls unter Druck durchgeführt wird) zu ermöglichen. Die CO₂-angereicherte Wasserphase **C2** dieser **zweiten** Extraktion wird in einer Flasche gesammelt, die über ein Tauchrohr mit dem Reaktorbehälter verbunden ist, und die Masse an **C2** wird bestimmt. Anschließend werden am Rotationsverdampfer alle flüchtigen Bestandteile von **C2** bei 40 °C und einem Druck von zunächst ca. 240 mbar, später reduziert auf ca. 20 mbar, entfernt. Die im Reaktorbehälter verbleibende organische Phase **B2** wird optional für weitere Extraktionsversuche durch Zugabe frischer Portionen (150 ml) Wassers verwendet (identisches Vorgehen zur weiteren wässrig-organisches Extraktion in CO₂-Anwesenheit zum Erhalt der Phasen **C3**, **C4** bzw. **B3, B4**) und am Ende aller Extraktionsversuche gewogen und am Rotationsverdampfer von allen flüchtigen Bestandteil befreit.

Alle Rückstände werden nach Verdampfen der flüchtigen Komponenten gravimetrisch erfasst und mit ¹H-NMR-Spektroskopie untersucht. Mit oben beschriebener Methodik werden die jeweiligen Zusammensetzungen bestimmt.

Um den Einfluss von CO₂ auf die Trennung von Amin/Polyolen zu vergleichen, wurden ähnliche Experimente unter identischen Bedingungen ohne Anwesenheit von CO₂-Gas durchgeführt.

**2,4'-TDA** / **Polyol B:** 1,4 g 2,4'-TDA wurden mit 2,6 g Polyol B vermischt, entsprechend einer typischen Zusammensetzung wie sie durch Hydrolyse eines PU-Weichschaumprodukts erhalten wird. Das anschließende Extraktionsverfahren wird analog zu der oben beschriebenen Prozedur im Fall von (m)MDA/Polyolgemisch A durchgeführt. Abweichend davon wird im Falle der CO₂-assistierten Extraktion (Beispiel 10) vorab keine neutrale wässrige Extraktion durchgeführt. Die detaillierten Bedingungen und erfolgten Extraktionsschritte sind in den folgenden Tabellen zu den Beispielen im Detail aufgeführt.

### Druckhydrolyse

Die Hydrolyseversuche wurden in einem Edelstahl-Druckreaktor von 300 ml Fassungsvermögen mit einem Glaseinsatz durchgeführt. Der PU-Schaum (Zusammensetzung siehe bei Schaumrezeptur 1) wird zunächst mit einem Mixer zerkleinert, und anschließend werden 10 g des zerkleinerten Schaums zusammen mit 30 g Wasser in dem Reaktor vorgelegt. Anschließend wird der Reaktor mit N₂ bei Raumtemperatur inertisiert und mit einem eingestellten N₂-Partialdruck von 10 bar in einen auf Reaktionstemperatur temperierten Aluminiumblock gestellt, in dem die Reaktionsmischung bei 900 U/min für 4 h gerührt wird. Nach beendeter Reaktion wird der Reaktor in einem Eisbad abgekühlt. Nun wird der Druck abgelassen und der Reaktor geöffnet. Das erhaltene heterogene mehrphasige Produktgemisch wird mit 50 ml THF aufgenommen, und im Anschluss werden alle flüchtige Komponenten im Vakuum entfernt. Der verbleibende Rückstand dient als Ausgangsmaterial für die Extraktionsversuche von hydrolysiertem PU-Schaum.

**Tabelle 1: Übersicht der durchgeführten erfindungsgemäßen und Vergleichsbeispiele**

| **Bsp.** | **Verwendetes Ausgangsmaterial** | **CO₂-Partialdruck während der Extraktion [bar]** | **Extraktions-temperatur [°C]** |
|---|---|---|---|
| 1 (Vgl.) | 4,4'-mMDA / Polyolgemisch A | 0 | 20 |
| 2 | 4,4'-mMDA / Polyolgemisch A | 30 | 20 |
| 3 | 4,4'-mMDA / Polyolgemisch A | 45 | 20 |
| 4 | MDA-61 / Polyolgemisch A | 45 | 20 |
| 5 | MDA-61 / Polyolgemisch A | 45 | 4 |
| 6 | MDA-61 / Polyolgemisch A | 45 | 50 |
| 7 (Vgl.) | Hydrolysierter PU-Schaum | 0 | 20 |
| 8 | Hydrolysierter PU-Schaum | 45 | 20 |
| 9 (Vgl.) | 2,4-TDA / Polyol B | 0 | 20 |
| 10 | 2,4-TDA / Polyol B | 45 | 20 |

### Beispiele 1 bis 3: Organisch-wässrige Extraktion von 4,4-mMDA / Polyolgemisch A

**Tabelle 2: Ergebnisse der Beispiele 1 bis 3:**

| **Extraktions-schritt des jeweiligen Beispiels** | **Art der Extraktion** | **Phase** | **Verhältnis^{[a]} Amin / Polyol** | | |
|---|---|---|---|---|---|
| | | | **Bsp. 1 (Vgl.)** | **Bsp. 2** | **Bsp. 3** |
| **1** | Neutral | A**1** | 2-6/98-94^{[b]} | | |
| **2** | Neutral | A**2** | 14/86 | - | - |
| **3** | Neutral | A**3** | 39/61 | - | - |
| **2** | Mit CO₂ | C**2** | | 82/18 | 93/7 |
| **3** | Mit CO₂ | C**3** | | 83/17 | 93/7 |
| **4** | Mit CO₂ | C**4** | | | 91/9 |

| | | | | | |
|---|---|---|---|---|---|
| [a] Massenverhältnis. [b] Der Bereich spiegelt die experimentelle Schwankungsbreite wider. | | | | | |

Man sieht, dass in der ersten neutralen Extraktion für die wässrige Phase eine hohe Selektivität *für die Polyole* beobachtet wird (siehe die Phase A1). Hier werden kurzkettige Polyole mit hoher Funktionalität aus dem Amin-Polyol-Gemisch herausgewaschen, während eher langkettige Polyole mit geringerer Funktionalität gemeinsam mit dem Großteil der Amine in der organischen Phase verbleiben. In den nächsten Stufen werden zunehmend gemischte Verfahrensprodukte ohne gute Trennleistung erhalten (siehe die Phasen A2 und A3). Die Überführung der Amine in die wässrige Phase, was nach weitgehender Entfernung der kurzkettigen hochfunktionellen Polyole in der ersten Extraktion das Ziel wäre, gelingt in Beispiel 1 nicht. Erst die Zugabe von CO₂ in der zweiten und dritten Extraktion führt zu einer deutlich besseren Selektivität für die Amine, wobei ein höherer CO₂-Partialdruck zu einer besseren Trennleistung führt (vgl. Bsp. 2 mit Bsp. 3).

### Beispiele 4 bis 6: Organisch-wässrige Extraktion von MDA-61 / Polyolgemisch A

**Tabelle 3: Ergebnisse der Beispiele 4 bis 6:**

| **Extraktionsschritt des jeweiligen Beispiels** | **Art der Extraktion** | **Phase** | **Verhältnis^{[a]} Amin / Polyol** | | |
|---|---|---|---|---|---|
| | | | **Bsp. 4** | **Bsp. 5** | **Bsp. 6** |
| **1** | Neutral | A**1** | 1,4/98,6 | | |
| **2** | Mit CO₂ | C**2** | 60/40 | 67/33 | 74/26 |
| **3** | Mit CO₂ | C**3** | 78/22 | 90/10 | 81/19 |
| **4** | Mit CO₂ | C**4** | 86/14 | 92,4/7,6 | 92,8/7,2 |

| | | | | | |
|---|---|---|---|---|---|
| [a] Massenverhältnis. | | | | | |

In allen drei Fällen wird eine deutliche verbesserte Selektivität für die Extraktion des Amins in die wässrige Phase beobachtet. Mit steigender Anzahl an Extraktionsstufen wird eine bessere Trennleistung erreicht.

### Beispiele 7 und 8: Organisch-wässrige Extraktion von hydrolysiertem PU-Schaum

**Tabelle 4: Ergebnisse der Beispiele 7 und 8:**

| **Extraktionsschritt des jeweiligen Beispiels** | **Art der Extraktion** | **Phase** | **Verhältnis^{[a]} Amin / Polyol** | |
|---|---|---|---|---|
| | | | **Bsp. 7 (Vgl.)** | **Bsp. 8** |
| **1** | Neutral | A**1** | 10/90 | |
| **2** | Neutral | A**2** | 38/62 | - |
| **3** | Neutral | A**3** | 59/41 | - |
| **2** | Mit CO₂ | C**2** | - | 41/59 |
| **3** | Mit CO₂ | C**3** | - | 79/21 |
| **4** | Mit CO₂ | C**4** | - | 85/15 |

| | | | | |
|---|---|---|---|---|
| [a] Massenverhältnis. | | | | |

Im Falle von zusätzlichem CO₂ nach einer ersten erfolgten neutral-wässrigen Extraktion wird eine verbesserte Selektivität für die Extraktion des Amins in die wässrige Phase beobachtet. Mit steigender Anzahl an Extraktionsstufen wird eine bessere Trennleistung erreicht. Nach der insgesamt dritten Extraktion beträgt das Amin/Polyol-Verhältnis in Beispiel 7 (Vergleich) lediglich 59/41, während dieses in Beispiel 8 79/21 beträgt.

### Beispiele 9 und 10: Organisch-wässrige Extraktion von 2,4-TDA / Polyol B

**Tabelle 5: Ergebnisse der Beispiele 9 und 10:**

| **Extraktionsschritt des jeweilig. Bsp.** | **Phase** | **Verhältnis^{[a]} Amin / Polyol** | | **Rückgewinnung^{[b]} total^{[c]}** | | **Rückgewinnung^{[b]} Amin^{[c]}** | | **Rückgewinnung^{[b]} Polyol^{[c]}** | |
|---|---|---|---|---|---|---|---|---|---|
| | | **Bsp. 9 (Vgl.)** | **Bsp. 10** | **Bsp. 9 (Vgl.)** | **Bsp. 10** | **Bsp. 9 (Vgl.)** | **Bsp. 10** | **Bsp. 9 (Vgl.)** | **Bsp. 10** |
| **1** (neutral) | A**1** | 93/7 | - | 9,1 | - | 20,9 | - | 1,1 | - |
| **2** (neutral) | A**2** | 93/7 | - | 10,0 | - | 22,6 | - | 1,2 | - |
| **3** (neutral) | A**3** | 97/3 | - | 12,2 | - | 28,8 | - | 0,7 | - |
| | B**3** | 17/83 | - | 68,7 | - | 27,7 | - | 97,0 | - |
| **1** (mit CO₂) | C**1** | - | 97/3 | - | 19,9 | - | 47,9 | - | 1,3 |
| **2** (mit CO₂) | C**2** | - | 93/7 | - | 12,5 | - | 29,1 | - | 1,7 |
| **3** (mit CO₂) | C**3** | - | 89/11 | - | 10,1 | - | 22,1 | - | 0,2 |
| | B**3** | - | 0,7/99,3 | - | 51,5 | - | 0,9 | - | 96,8 |

| | | | | | | | | | |
|---|---|---|---|---|---|---|---|---|---|
| [a] Massenverhältnis. [b] Angegeben sind Massen-%. Die Summe der Rückgewinnungswerte der einzelnen Phasen ist auf 100 % normiert. [c] Die Werte *Rückgewinnung "total"* wurden auf Basis der Auswaage der nicht flüchtigen Bestandteile bestimmt. Die Werte *Rückgewinnung "Amin"* bzw. *"Polyol"* spiegeln den analytischen Anteil in der jeweiligen Phase im Verhältnis zur ursprünglichen Zusammensetzung der Mischung wider. | | | | | | | | | |

Im Fall des verhältnismäßig gut wasserlöslichen TDA ist zwar nur ein geringer Effekt von CO₂ auf die Selektivität für die Extraktion des Amins in die wässrige Phase beobachtbar (vgl. Phase A1 mit C1), jedoch führt der Einsatz von CO₂ zu einer höheren Beladung der Phasen, was in der beschriebenen Extraktionssequenz zu einer vollständigen Trennung mit einer sehr reinen organischen Polyolphase (Bsp. 10, B3) führt. Bei analogem Vorgehen ohne Zugabe von CO₂ kann keine reine organische Polyolphase zurückgewonnen werden (Bsp. 9, B3).

## Patentansprüche

1. Verfahren zur Aufarbeitung einer Fraktion enthaltend ein Polyetherpolyol und ein Amin, wobei die Fraktion aus einem Wiederverwertungsprozess eines auf einer Isocyanatkomponente und einer das Polyetherpolyol umfassenden Polyolkomponente basierenden Polyurethanprodukts stammt,
das Verfahren umfassend einen Schritt (α):
Behandlung der Fraktion mit Kohlenstoffdioxid und eine Trennung in eine organische Polyetherpolyolfraktion und in eine wässrige Aminfraktion.

2. Verfahren nach Anspruch 1, bei welchem vor oder während der Durchführung von Schritt (α) Wasser zu der Fraktion gegeben wird.

3. Verfahren nach Anspruch 1 oder 2, bei welchem vor oder während der Durchführung von Schritt (α) ein organisches Lösungsmittel zu der Fraktion gegeben wird.

4. Verfahren nach Anspruch 3, bei welchem das organische Lösungsmittel ausgewählt ist aus (i) einem Ester, (ii) einem aromatischen Kohlenwasserstoff, (iii) einem halogenierten aliphatischen oder aromatischen Kohlenwasserstoff, (iv) einem Ether oder (v) Mischungen von zwei oder mehr der vorgenannten organischen Lösungsmittel.

5. Verfahren nach einem der Ansprüche 1 bis 4, bei welchem die Fraktion vor der Durchführung von Schritt (α) ohne Zugabe von Kohlenstoffdioxid mit Wasser gewaschen wird.

6. Verfahren nach einem der Ansprüche 1 bis 5, bei welchem der Wiederverwertungsprozess eine Umsetzung des Polyurethanprodukts mit Wasser mit oder ohne Zugabe eines organischen Chemolysereagenz unter Erhalt eines Amin-haltigen Chemolyseprodukts umfasst.

7. Verfahren nach Anspruch 6, bei welchem das Amin-haltige Chemolyseprodukt oder ein aus diesem durch Abdestillieren von Bestandteilen, die leichter als das Polyetherpolyol und das Amin sieden, erhaltenes Verfahrensprodukt dem Schritt (α) unterworfen wird;
oder
bei welchem ein durch weitere Verarbeitung des Amin-haltigen Chemolyseprodukts umfassend eine Phasentrennung desselben oder eine Extraktion desselben mit einem organischen und/oder wässrigen Extraktionsmittel erhaltenes Verfahrensprodukt dem Schritt (α) unterworfen wird.

8. Verfahren nach einem der Ansprüche 1 bis 5, bei welchem der Wiederverwertungsprozess eine Umsetzung des Polyurethanprodukts mit einem organischen Chemolysereagenz unter Erhalt eines Carbamat- und/oder Harnstoff-haltigen Chemolyseproduktes und eine Auftrennung desselben in eine erste, Carbamate und/oder Harnstoffe enthaltende Phase und eine zweite, Polyetherpolyole enthaltende Phase umfasst, wobei die zweite, Polyetherpolyole enthaltende Phase zur Abtrennung darin enthaltener Amine dem Schritt (α) unterworfen wird.

9. Verfahren nach einem der Ansprüche 1 bis 5 oder 8, bei welchem der Wiederverwertungsprozess eine Umsetzung des Polyurethanprodukts mit einem organischen Chemolysereagenz unter Erhalt eines Carbamat- und/oder Harnstoff-haltigen Chemolyseproduktes und eine Auftrennung desselben in eine erste, Carbamate und/oder Harnstoffe enthaltende Phase und eine zweite, Polyetherpolyole enthaltende Phase umfasst, umfassend eine Hydrolyse der ersten, Carbamate und/oder Harnstoffe enthaltenden Phase unter Erhalt einer Amine enthaltenden Phase, wobei die Amine enthaltende Phase oder ein aus dieser durch Abdestillieren von organischem Chemolysereagenz erhaltenes Verfahrensprodukt zur Abtrennung darin enthaltener Polyetherpolyole dem Schritt (α) unterworfen wird.

10. Verfahren nach Anspruch 8 oder 9, bei welchem die Auftrennung des Carbamat- und/oder Harnstoff-haltigen Chemolyseproduktes eine Phasentrennung desselben oder eine Extraktion desselben mit einem organischen und/oder wässrigen Extraktionsmittel umfasst.

11. Verfahren nach einem der vorstehenden Ansprüche, bei welchem die Behandlung der Fraktion mit Kohlenstoffdioxid in Schritt (α) so durchgeführt wird, dass sich in einem Gasraum oberhalb der Fraktion ein Druck von 10 bar bis 70 bar einstellt und der Stoffmengenanteil von Kohlenstoffdioxid in der Gasphase 80 % bis 100 % beträgt.

12. Verfahren nach Anspruch 11, bei welchem ein Druck von 10 bar bis 70 bar bis zur erfolgten Trennung der mit Kohlenstoffdioxid behandelten Fraktion in die organische Polyetherpolyolfraktion und die wässrige Aminfraktion beibehalten wird.

13. Verfahren nach einem der vorstehenden Ansprüche, bei welchem die Behandlung der Fraktion mit Kohlenstoffdioxid in Schritt (α) bei einer Temperatur von 4 °C bis 50°C durchgeführt wird.

14. Verfahren nach Anspruch 13, bei welchem eine Temperatur von 4 °C bis 50 °C bis zur erfolgten Trennung der mit Kohlenstoffdioxid behandelten Fraktion in die organische Polyetherpolyolfraktion und die wässrige Aminfraktion beibehalten wird.

15. Verfahren nach einem der vorstehenden Ansprüche, bei welchem die Isocyanatkomponente ein Isocyanat ausgewählt aus (i) Toluylendiisoycanat, (ii) Methylendiphenylendiisocyanat, (iii) einer Mischung aus Methylendiphenylendiisocyanat und Polymethylenpolyphenylenpolyisocyanat, (iv) Methylendicyclohexyl-4,4'-diisocyanat oder (v) einer Mischung zwei oder mehr der vorgenannten Isocyanate umfasst,
und/oder
bei welchem das Polyetherpolyol ein Polymerisat von Propylenoxid und optional weiteren Epoxiden umfasst.
